# EUROPEAN PATENT SPECIFICATION

(11) **EP 1 841 290 B1**
(45) Date of publication and mention of the grant of the patent: **28.09.2011**
(21) Application number: 06711904.0
(22) Date of filing: 18.01.2006
(51) Int. Cl.: H05B 6/68

(54) **HIGH-FREQUENCY HEATER**
HOCHFREQUENZHEIZUNG
CHAUFFAGE HAUTE FREQUENCE

(30) Priority: 18.01.2005 JP 2005009849
(43) Date of publication of application: 03.10.2007
(73) Proprietor: Panasonic Corporation, Kadoma-shi Osaka 571-8501 (JP)
(72) Inventor: SUENAGA, Haruo, c/o Matsushita Electric Industrial Co., Ltd., Chuo-ku, Osaka-shi, Osaka 540-6319 (JP); MORIYA, Hideaki, c/o Matsushita Electric Industrial Co., Ltd., Chuo-ku, Osaka-shi, Osaka 540-6319 (JP); SAKAI, Shinichi, c/o Matsushita Electric Industrial Co., Ltd., Chuo-ku, Osaka-shi, Osaka 540-6319 (JP); SHIROKAWA, Nobuo, c/o Matsushita Electric Industrial Co., Ltd., Chuo-ku, Osaka-shi, Osaka 540-6319 (JP); KINOSHITA, Manabu, c/o Matsushita Electric Industrial Co., Ltd., Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2006/300635
(87) International publication number: WO 2006/077879

(56) References cited:
- JP-A- 7 176 375
- JP-A- 11 288 795
- JP-A- 2000 058 252
- JP-A- 2000 058 252
- JP-A- 2003 303 676
- JP-A- 2004 006 384
- JP-A- 2005 302 375
- US-A1- 2004 074 900

## Description

The present invention relates to a high frequency heating apparatus using a magnetron such as a microwave oven. More specifically, the present invention is directed to a control system for suppressing higher harmonic distortion of commercial power supply currents which are supplied to a magnetron driving power supply.

Since conventional power supplies mounted on high frequency heating apparatus are heavy and bulky, there are needs of power supplies made compact in light weight. To this end, various positive ideas capable of constructing such low-cost and compact switching type power supplies in light weight have been proposed in present various fields. In high frequency heating apparatus for cooking food by utilizing microwaves generated from magnetrons, compact and light-weight power supplies for driving the magnetrons are required which could be realized by switching type inverter circuits.

More specifically, among these switching type inverter circuits, high frequency inverter circuits which constitute a subject inverter circuit of the present invention correspond to resonant type circuit systems using switching elements in which arms of a bridge circuit are arranged by two switching elements (refer to, for example, patent publication 1).

When the above-explained magnetron driving power supplies are arranged in the switching type high frequency inverter circuits, the below-mentioned problem is still left in conjunction with such a fact that magnetrons constitute non-linear loads. That is, current waveforms of commercial power supplies, which are supplied to the magnetron driving power supplies, contain a large amount of higher harmonic components.

On the other hand, an absolute value of the above-described higher harmonic components is increased in connection with an increase of power consumption of the magnetron driving power supplies in order to satisfy requirements for shortening cooking time of microwave ovens. This may conduct that higher harmonic currents of power supplies can be more hardly suppressed.

Various sorts of control systems for suppressing higher harmonic currents have been proposed (refer to, for example, patent publication 2).

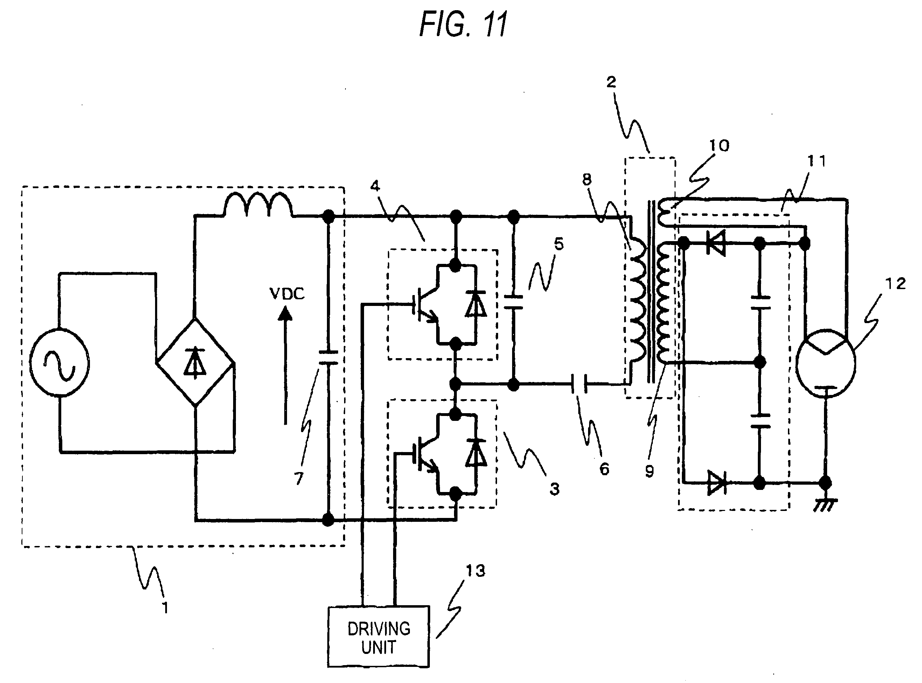

Fig. 11 indicates an example of a magnetron driving power supply (inverter power supply) of a high frequency heating apparatus. The magnetron driving power supply is arranged by a DC power supply 1, a leakage transformer 2, a first semiconductor switching element 3, a first capacitor (snubber capacitor) 5, a second capacitor (resonant capacitor) 6, a third capacitor (smoothing capacitor) 7, a second semiconductor switching element 4, a driving circuit 13, a full wave voltage doubler rectifying circuit 11, and a magnetron 12.

The DC power supply 1 rectifies an AC voltage of a commercial power supply in a full wave rectification manner to obtain a DC voltage "VDC", and then, applies the DC voltage "VDC" to a series circuit constituted by the second capacitor 6 and a primary winding 8 of the leakage transformer 2. The first semiconductor switching element 3 has been series-connected to the second semiconductor switching element 4, and the series circuit constituted by the primary winding 8 of the leakage transformer 2 and the second capacitor 6 has been parallel-connected to the second semiconductor switching element 4.

The first capacitor 5 is parallel-connected to the second semiconductor switching element 4, and owns a so-called "snubber role" capable of suppressing a rush current (rush voltage) which is produced when a switching operation is performed. An AC high voltage generated in a secondary winding 9 of the leakage transformer 2 is converted into a DC high voltage by the full wave voltage doubler rectifying circuit 11, and then, the DC high voltage has been applied between an anode and a cathode of the magnetron 12. A third winding 10 of the leakage transformer 2 has supplied a current to the cathode of the magnetron 12.

Both the first semiconductor switching element 3 and the second semiconductor switching element 4 have been constituted by IGBTs and flywheel diodes connected parallel to the IGBTs. As apparent from the foregoing descriptions, the first and second semiconductor switching elements 3 and 4 are not limited only to the above-explained element sort. Alternatively a thyristor, a GTO switching element, and the like may be employed.

The driving unit 13 contains therein an oscillating circuit (not shown) which is employed so as to produce drive signals for the first semiconductor switching element 3 and the second semiconductor switching element 4. The oscillating circuit produces a rectangular wave having a predetermined frequency, and supplies "DRIVE" signals to the first semiconductor switching element 3 and the second semiconductor switching element 4. Immediately after one of the first semiconductor switching element 3 and the second semiconductor switching element 4 is turned OFF, a voltage between both terminals of the other semiconductor switching element 3, or 4 is high. As a result, if the other semiconductor switching element 3, or 4 is turned OFF at this time instant, then an excessively large current having a spike shape may flow, so that unwanted loss and unnecessary noise may occur. However, since a dead time is conducted, turning-OFF operation is delayed until this voltage between the terminals of the other semiconductor switching element is decreased to approximately 0 V. As a consequence, the unwanted loss and the unnecessary noise can be prevented. Apparently, when these first and second semiconductor switching elements 3 and 4 are switched in a reverse manner, similar operations are carried out.

Since explanations of detailed operations as to the DRIVE signals applied from the driving circuit 13 and the respective operation modes of both the first and second semiconductor switching elements 3 and 4 are described in the above-described patent publication 1, detailed explanations thereof are omitted.

As a feature of the circuit arrangement shown in Fig. 11, a voltage applied to the first semiconductor switching element 3 and the second semiconductor switching element 4 may be equal to the DC power supply voltage VDC, namely 240 *√2 = 339 V, even in a commercial power supply voltage (240 V) for European homes, which is the highest power supply voltage. As a result, even when abnormal cases are assumed which occur during recovery operations from indirect lighting stroke and instantaneous voltage stop, such a low-cost switching element whose withstanding voltage is about 600 V may be used as the first semiconductor switching element 3 and the second semiconductor switching element 4.

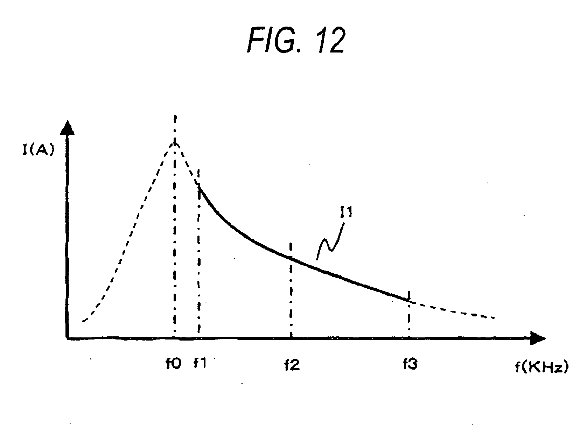

Next, Fig. 12 shows a resonance curve appeared in this sort of inverter power supply circuit (namely, series resonant circuit is constituted by inductance "L" and capacitance "C").

Fig. 12 is a diagram for indicating a frequency-to-current characteristic in the case that a constant voltage is applied to the series resonant circuit. An abscissa of this characteristic diagram indicates a switching frequency, and an ordinate thereof shows a current which flows through a primary winding side of a leakage transformer.

An impedance of the series resonant circuit becomes minimum at a resonant frequency "f0", and this impedance is increased, as a frequency is separated from the resonant frequency "f0". As a result, as indicated in this drawing, the current "I1" becomes maximum when the frequency becomes the resonant frequency "f0. " The current "I1" is decreased, as the frequency range is increased to "f1" up to "f3."

It should be understood that in an actual inverter operation, such a frequency range (indicated by solid line portion "I1") from "f1" to "f3" is used which is higher than this resonant frequency "f0."

As will be explained later, in a microwave oven using a magnetron which corresponds to a nonlinear load, in the case that a power supply voltage to be inputted is an AC voltage of a commercial power supply, a switching frequency is changed in response to a phase of the power supply voltage.

While the resonance curve of Fig. 12 is utilized so as to relatively increase a step-up ratio of a magnetron applied voltage to the commercial power supply voltage, the switching frequency in the respective high frequency outputs is set to the highest switching frequency in such phases which are located in the vicinity of 90 degrees and 270 degrees at which the instantaneous voltage of the commercial power supply becomes the highest voltage.

For instance, in the case that the microwave oven is operated in 200 W, the switching frequency becomes a frequency near "f3"; in the case that the microwave oven is operated in 500 W, the switching frequency becomes a frequency lower than "f3"; and in the case that the microwave oven is operated in 1,000 W, the switching frequency becomes a frequency which is further lower than "f3."

As apparent from the foregoing description, since either the input power or the input current is controlled, this frequency is changed in response to variations as to voltages of the commercial power supply, temperatures of the magnetron, and the like.

Also, in phases near 0 degree and 180 degrees at which the instantaneous voltage of the commercial power supply becomes the lowest voltage, in correspondence with such a magnetron characteristic that if a high voltage is not applied, then the magnetron cannot be oscillated in a high frequency, the switching frequency is lowered to a frequency in the vicinity of the resonant frequency "f0" so as to increase the step-up ratio of the magnetron applied voltage with respect to the commercial power supply voltage. Thus, it is so set that the phase width of the commercial power supply is widened where electromagnetic waves are generated from the magnetron.

It should be noted that when the switching frequency is extremely approximated to the resonant frequency "f0", an unstable operation such as abnormal resonance is induced. As a result, a minimum frequency limiting circuit capable of limiting the switching frequency to the frequency "f1" so as to prevent the above-explained phenomenon is required.

As previously explained, since the inverter operating frequency is changed for every power supply phase, such current waveforms which contain a large amount of basic wave (commercial power supply frequency) components, and a small amount of higher harmonic components can be realized.
[Patent Publication 1]
   JP-A-2000-58252
[Patent Publication 2]
   JP-A-2004-6384
   In addition, JP 11 288 795 discloses a frequency modulating device applied for stabilizing a discharge lamp. In order to limit a rectified pulsation voltage, D2 applies a voltage limiting element having a limiting voltage, which is lower than the wave height value of the voltage applied to the LED side of a photocoupler.

However, in the above-explained arrangement, the below-mentioned problem is revealed. That is, due to such a reason that the switching frequency is rapidly changed in the vicinity of a boundary between a time period during which the switching frequency is limited to the frequency "f1" by the minimum frequency limiting circuit, and another time period during which the limitation of the switching frequency is released, higher order distortion is produced in the currents of the commercial power supply.

The present invention has been made to reduce the above-described higher order distortion, and therefore, has an object to provide an inverter circuit capable of reducing not only lower order distortion, but also higher order distortion.

This is achieved by the features of the independent claim.

With employment of the above-described arrangement, there is no such a sudden change of the switching frequency in the phases in the vicinity of 0 degree and 180 degrees at which the instantaneous voltage of the commercial power supply becomes the lowest voltage. As a result, the power supply higher harmonic distortion of the higher orders can be reduced.

In accordance with the high frequency heating apparatus of the present invention, the minimum frequency limiting circuit is arranged in such a manner that the switching frequency is smoothly changed which is located in the vicinity of the boundary between the time period during which the switching frequency is limited to the minimum switching frequency, and the time period during which the limitation to the minimum switching frequency is released. As a result, since the sudden change of the switching frequency can be deleted, the power supply higher harmonic distortion of the higher orders which occurs due to this sudden change of the switching frequency can be reduced.

### [Brief Description of the Drawings]

Fig. 1 is a circuit diagram for showing a magnetron driving power supply circuit of a high frequency heating apparatus according to an first embodiment to an fourth embodiment of the present invention.
Fig. 2 is a detailed circuit diagram of an oscillating circuit employed in the first embodiment of the present invention.
Fig. 3 is a detailed circuit diagram for indicating a frequency-modulated signal producing circuit employed in the first embodiment of the present invention.
Fig. 4 is a diagram for representing a frequency-modulated waveform used in the first embodiment of the present invention.
Fig. 5 is a detailed circuit diagram for indicating a frequency-modulated signal producing circuit employed in the second embodiment of the present invention.
Fig. 6 is a diagram for representing a frequency-modulated waveform used in the second embodiment of the present invention.
Fig. 7 is a detailed circuit diagram for indicating a frequency-modulated signal producing circuit employed in the third embodiment of the present invention.
Fig. 8 is a diagram for representing a frequency-modulated waveform used in the fourth embodiment of the present invention.
Fig. 9 is a circuit diagram for showing a magnetron driving power supply circuit of a high frequency heating apparatus according to a fifth embodiment of the present invention.
Fig. 10 is a circuit diagram for showing a magnetron driving power supply circuit of a high frequency heating apparatus according to a sixth embodiment of the present invention.
Fig. 11 is the circuit diagram for showing the magnetron driving power supply circuit of the conventional high frequency heating apparatus.
Fig. 12 represents the current-to-used frequency characteristic graph in such a case that the constant voltage is applied to the inverter resonant circuit.

### [Description of Reference Numerals]

- 1: DC power supply;
- 2: leakage transformer;
- 3: first semiconductor switching element;
- 4: second semiconductor switching element;
- 5: first capacitor;
- 6: second capacitor;
- 7: third capacitor;
- 11: full wave voltage doubler rectifying circuit (rectification means);
- 12: magnetron;
- 14: driving control circuit unit (drive means);
- 15: frequency-modulated signal producing circuit;
- 16: oscillating circuit;
- 17: dead time producing circuit;
- 18: switching element drive circuit;
- 19: input constant control circuit;

Referring now to drawings, various embodiments of the present invention will be described. It should be understood that the present invention is not limited by the embodiments.

### (EMBODIMENT 1)

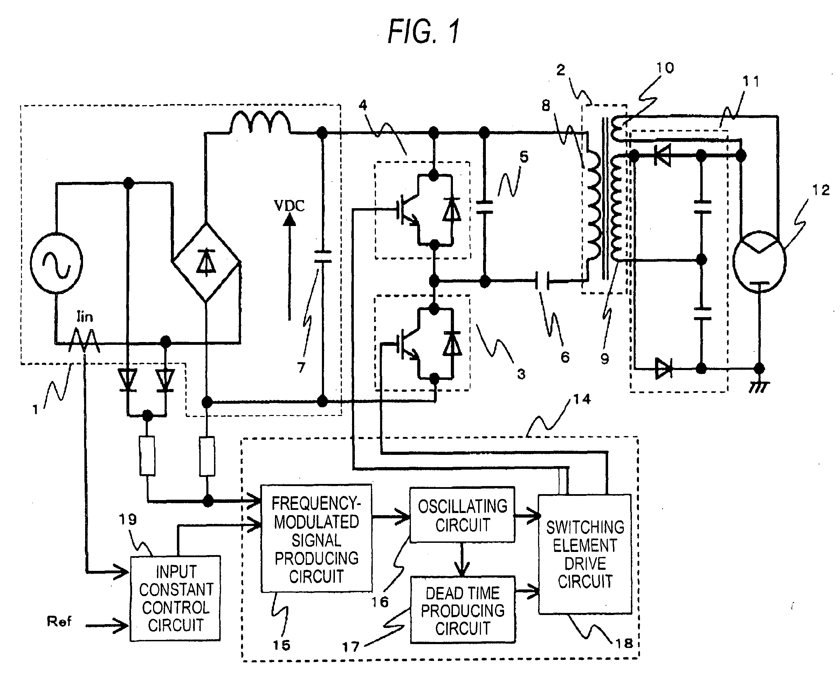

Fig. 1 shows a circuit diagram of a magnetron driving inverter circuit of a high frequency heating apparatus according to a first embodiment of the present invention. In the inverter circuit, a main circuit thereof is constituted by employing a DC power supply 1, a leakage transformer 2, a first semiconductor switching element 3, a first capacitor (snubber capacitor) 5, a second capacitor (resonant capacitor) 6, a third capacitor (smoothing capacitor) 7, a second semiconductor switching element 4, a driving circuit 14, a full wave voltage doubler rectifying circuit 11, and a magnetron 12. Since the arrangement of the above-described main circuit except for the driving circuit 14 is identical to that of Fig. 11, explanations thereof are omitted.

In the driving circuit 14 used to drive the first and second semiconductor switching elements 3 and 4, first of all, a frequency-modulated waveform is formed by a frequency-modulated signal producing circuit 15 by employing a waveform which has been divided by resistors based upon a voltage of a commercial power supply. Also, the frequency-modulated signal producing circuit 15 receives a signal supplied from a power control circuit 19, and then, controls the received signal to become desirable high frequency power (200 W, 600 W etc.), as previously explained.

Next, based upon the frequency-modulated waveform produced by the frequency-modulated signal producing circuit 15, the oscillating circuit 16 oscillates a switching frequency signal, while a desirable dead time is determined by a dead time producing circuit 17 based upon the switching frequency signal. Then, rectangular wave signals are produced by a switching element driving circuit 18 in response to both the switching frequency signal and the desirable dead time signal, and then, these rectangular wave signals are applied to a gate of the first semiconductor switching element 3 and a gate of the second semiconductor switching element 4.

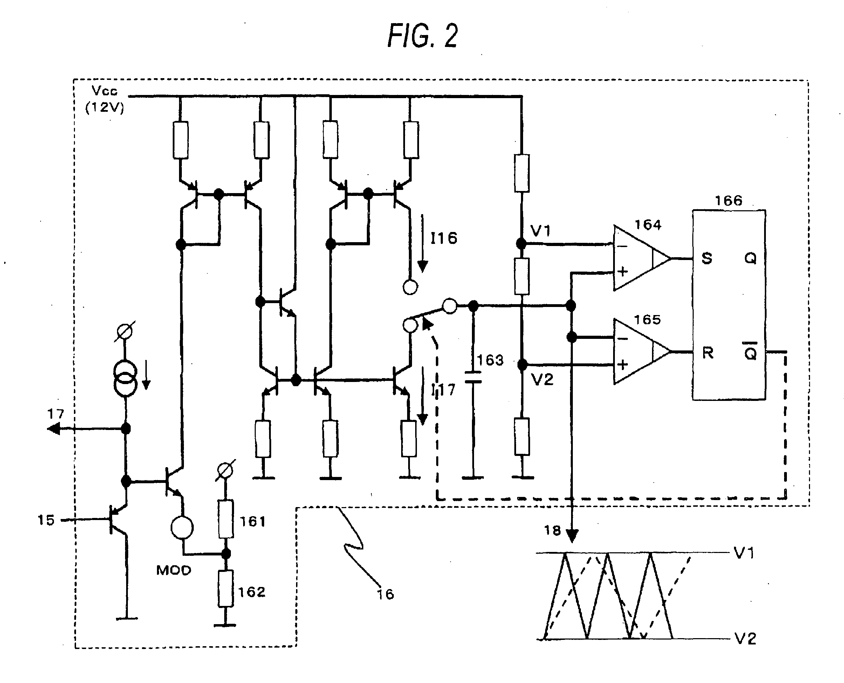

Fig. 2 is a detailed circuit of the oscillating circuit 16. An output of a comparator 164 and an output of a comparator 165 are inputted to an S terminal and an R terminal of an SR flip-flop 166 respectively. Charging and discharging operations to a capacitor 163 are switched based upon output polarities of a non-Q terminal of the SR flip-flop 166. When the output polarity of the non-Q terminal becomes "Hi", the capacitor 163 is charged by a current "I16", whereas when the output polarity of the non-Q terminal becomes "Lo", the capacitor 163 is discharged by a current "I17." Also, when the potential of the capacitor 163 exceeds "V1", the non-Q terminal of the SR flip-flop 166 is set to "Lo" by receiving the output "Hi" of the comparator 164, whereas when the potential of the capacitor 163 becomes lower than "V2", the non-Q terminal of the SR flip-flop 166 is reset to be switched to "Hi" by receiving the output "Hi" of the comparator 165.

Since the oscillating circuit 16 is arranged in the above-described circuit arrangement, the potential of the capacitor 163 becomes a triangular wave, and then, this triangular wave signal is transferred to the switching element drive circuit 18.

Also, the charge current I16 and the discharge current I17 with respect to the capacitor 163 are determined by a parallel-combined resistance between a resistor 161 and a resistor 162 based upon the frequency-modulated signal produced from the frequency-modulated signal producing circuit 15. These resistors 161 and 162 are connected to an MOD terminal of Fig. 2. An inclination of the triangular wave is changed in response to magnitudes of the charge and discharge currents I16 and I17. As a consequence, a switching frequency is determined based upon the magnitudes of the charge current I16 and the discharge current I17.

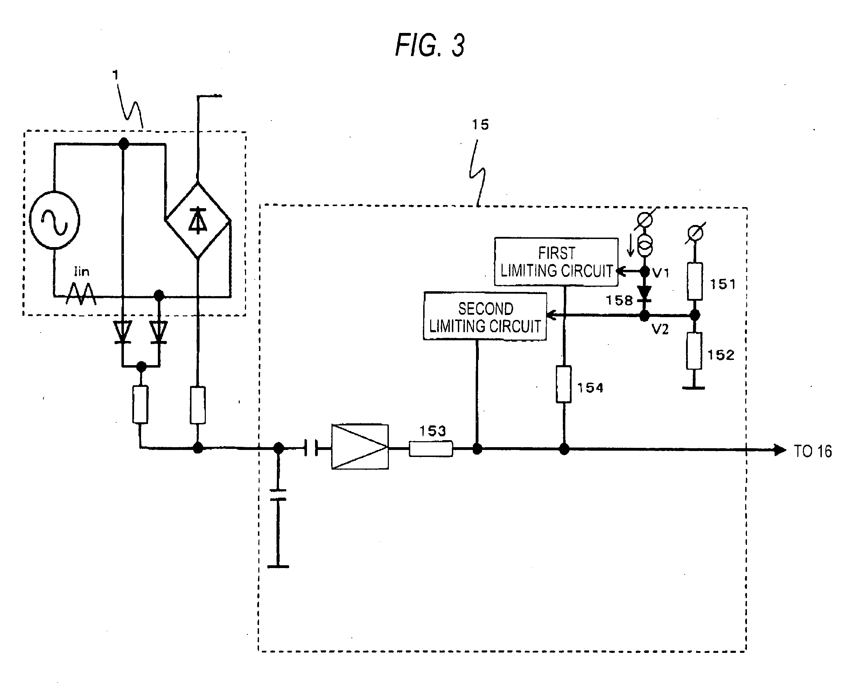

Fig. 3 is an example of a detailed circuit of the frequency-modulated signal producing circuit shown in Fig. 1. While a second limiting function depends upon a fixed voltage "V2" which is applied to resistors 151 and 152 based upon voltage-divided waveforms obtained after the voltage of the commercial power supply is rectified, a second limiting circuit may function, so that a minimum frequency is limited (Claims 4, 8, and 9).

Also, a first limiting function may function at the same time as the second limiting function (Claims 4 and 5). The first limiting function limits a change in the above-described frequency-modulated waveforms from such a frequency (in Fig. 3, voltage V1 for adding bias of forward direction voltage of diode 158 with respect to fixed voltage V2 is used) toward a lower frequency by gradually increasing an influence degree. The first-mentioned frequency is higher than the minimum frequency by a predetermined value.

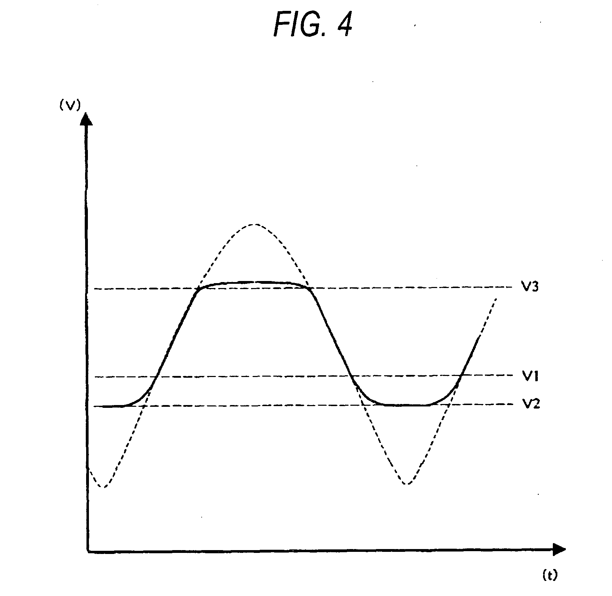

Fig. 4 represents a frequency-modulated waveform at this time. Based upon a waveform of a divided voltage obtained by rectifying the commercial power supply voltage, which is indicated by a dotted line, a lower limit (namely, lower limit equivalent to minimum frequency) is given at the fixed voltage V2 by a solid line. Also, an inclination of the voltage waveform gradually becomes gentle from the voltage V1 toward the fixed voltage V2, so that waveform changes in the vicinity of the minimum frequency become smooth, and thus, a sudden change of the frequency may be suppressed.

It should also be noted that although such a frequency-modulated waveform of a portion, which is higher than the fixed voltage V2 and different from the voltage-divided waveform obtained by rectifying the commercial power supply voltage may contribute to reduce the distortion of the commercial power supply current waveform of the lower order, since this distortion reduction is different from the major object of the present invention, detailed explanations thereof are omitted.

### (EMBODIMENT 2)

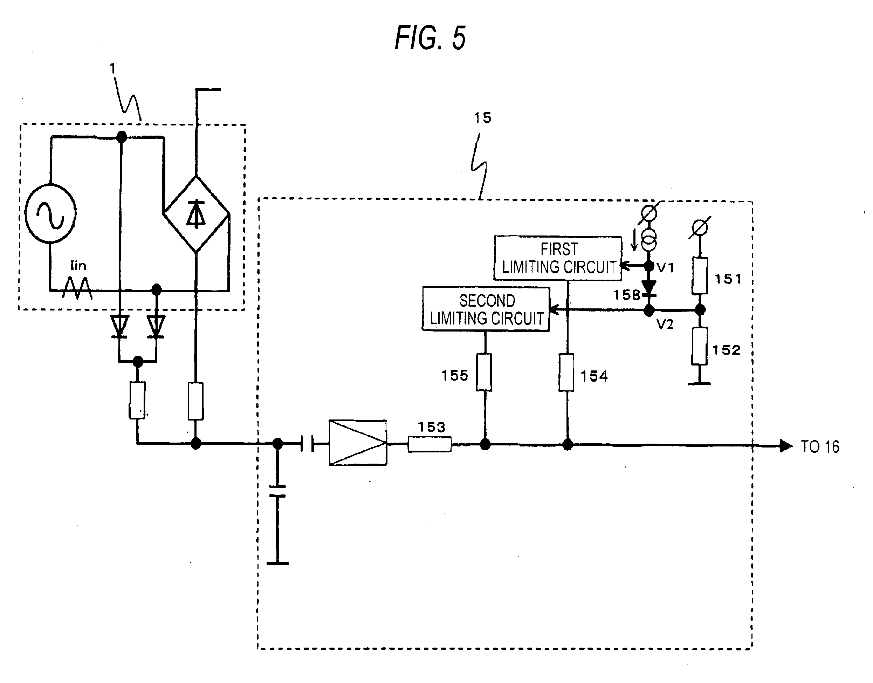

Fig. 5 indicates a frequency-modulated signal producing circuit employed in a magnetron driving inverter circuit according to a second embodiment of the present invention, which owns such a different point from that of the above-described first embodiment that a resistor 155 is newly provided. In accordance with this second embodiment, a second limiting function is realized by that in a frequency lower than, or equal to the fixed voltage V2, as the frequency is separated from V2, the change of the frequency-modulated waveforms can be limited by gradually increasing the influence degree.

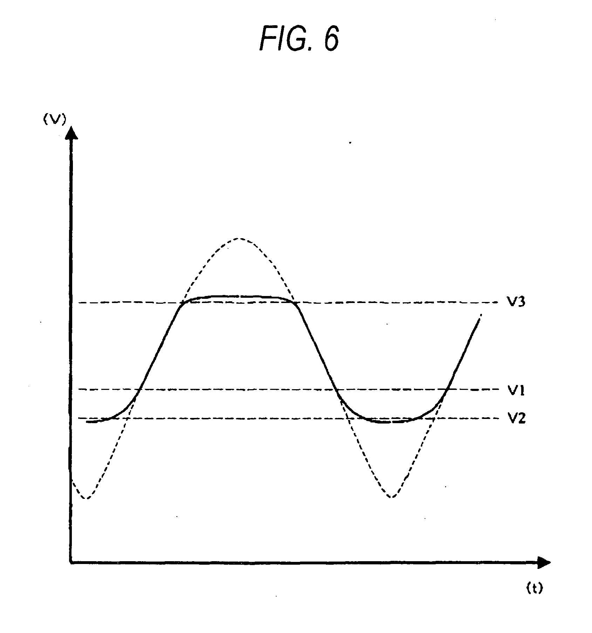

Fig. 6 shows a frequency-modulated waveform of the second embodiment. Similar to the first embodiment, a waveform change in the vicinity of the minimum frequency becomes smooth, so that a sudden change of the frequency can be suppressed.

### (EMBODIMENT 3)

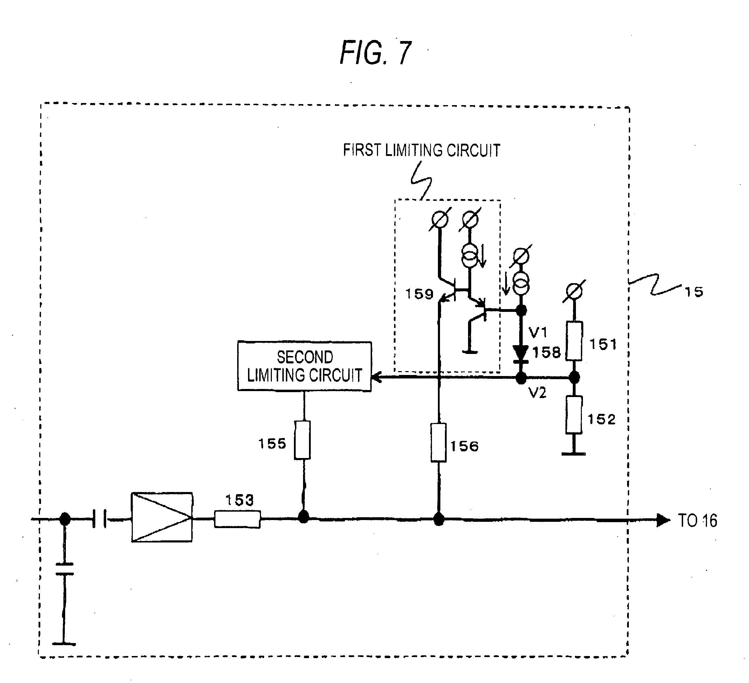

Fig. 7 indicates a frequency-modulated signal producing circuit employed in a magnetron driving inverter circuit according to a third embodiment of the present invention, which owns such a different point from that of the above-described first embodiment that a transistor 159 is provided in a first limiting circuit.

In accordance with this third embodiment, a resistance value change of a PN junction which is indicated by a voltage-to-current characteristic may be employed as a first limiting function by the transistor 159.

When a potential difference of the PN junction is increased, a resistance value of this PN junction is decreased. As a result, as the potential of the voltage-divided waveform obtained by rectifying the commercial power supply voltage becomes lower than the voltage V1 and is separated from this voltage V1, an influence degree of the first limiting function is increased, so that the waveform lower than, or equal to V1 is smoothly changed.

Also, while plural sets of the first limiting functions are provided, set potentials and limiting degrees thereof are changed. As a result, such a frequency-modulated waveform whose frequency change becomes more smoothly may be obtained.

### (EMBODIMENT 4)

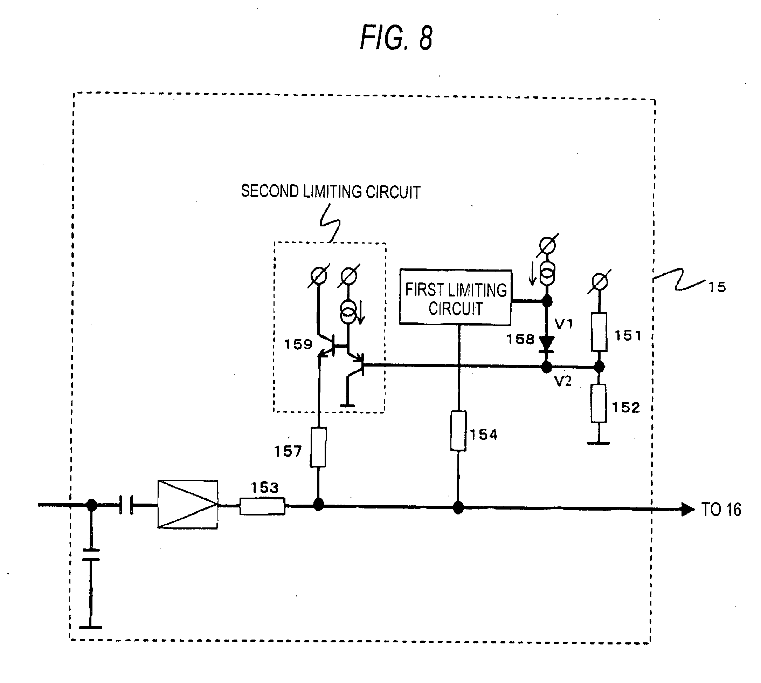

Fig. 8 is a partially detailed diagram of a frequency-modulated signal producing circuit, according to a fourth embodiment of the present invention, in which a resistance value changed of a PN junction indicated by a voltage-to-current characteristic is employed in a second limiting function.

In a portion that a potential of a frequency-modulated waveform becomes lower than the fixed voltage V2, since a second limiting function is added in combined with a first limiting function, an influence degree thereof is changed in a very small manner, and further, a frequency change becomes very small.

Also, since a minimum frequency limitation is not fixed, but is variable with respect to a voltage variation, the minimum frequency limitation may be increased/decreased based upon commercial power supply voltage information.

Since this circuit arrangement is employed, even in the respective power supply voltages, the formation of optimum frequency-modulated waveform capable of suppressing the generation of the higher harmonic component can be realized.

### (EMBODIMENT 5)

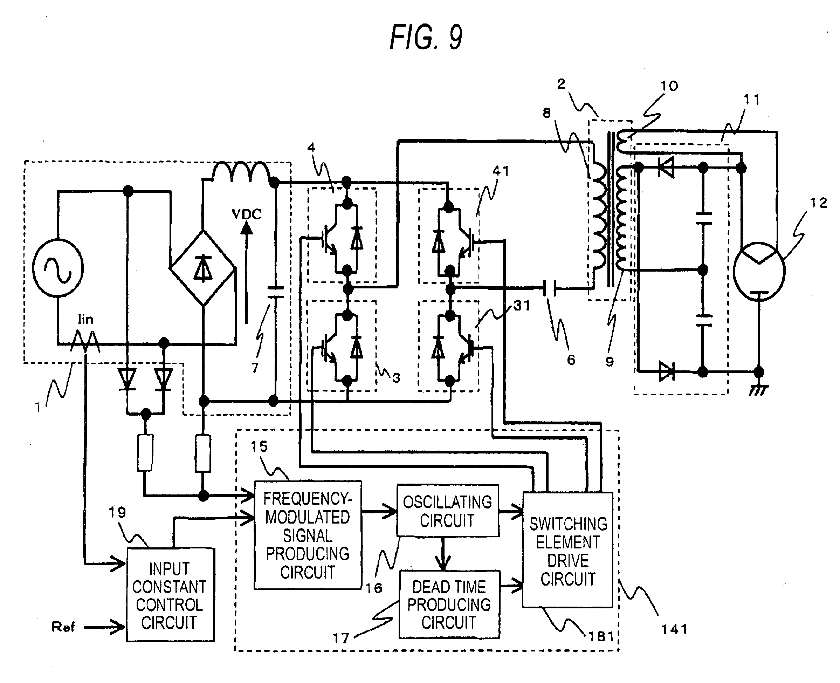

Fig. 9 is a circuit diagram for showing an arrangement of a magnetron driving power supply circuit according to a fifth embodiment of the present invention.

In the first embodiment, as shown in Fig. 1, the series circuit constructed of two semiconductor switching elements 3 and 4 is connected parallel to the DC voltage power supply obtained by rectifying the commercial power supply voltage; and the resonant circuit formed by connecting the primary winding of the leakage transformer 2 to the capacitor 6 is connected parallel to one of the semiconductor switching elements 3 and 4. In the fifth embodiment, as represented in Fig. 9, two sets of series circuits (namely, series circuit made of semiconductor switching elements 3 and 4, and also, series circuit made of semiconductor switching elements 31 and 41), each of which is constituted by two semiconductor switching elements, are connected parallel to a DC voltage power supply obtained by rectifying the commercial power supply voltage; and one end of a resonant circuit formed by connecting a primary winding 8 of a leakage transformer 2 to a capacitor 6 is connected to a center point of one series circuit, and the other end of the resonant circuit is connected to a center point of the other series circuit. Similar to the above-described first embodiment, in this fifth embodiment, a minimum frequency limiting means is arranged in such a manner that a switching frequency located in the vicinity of a boundary between a time period during which the switching frequency is limited to the minimum frequency, and a time period during which the limitation of the switching frequency is released is smoothly changed. As a result, higher harmonic currents of higher orders can be suppressed.

### (EMBODIMENT 6)

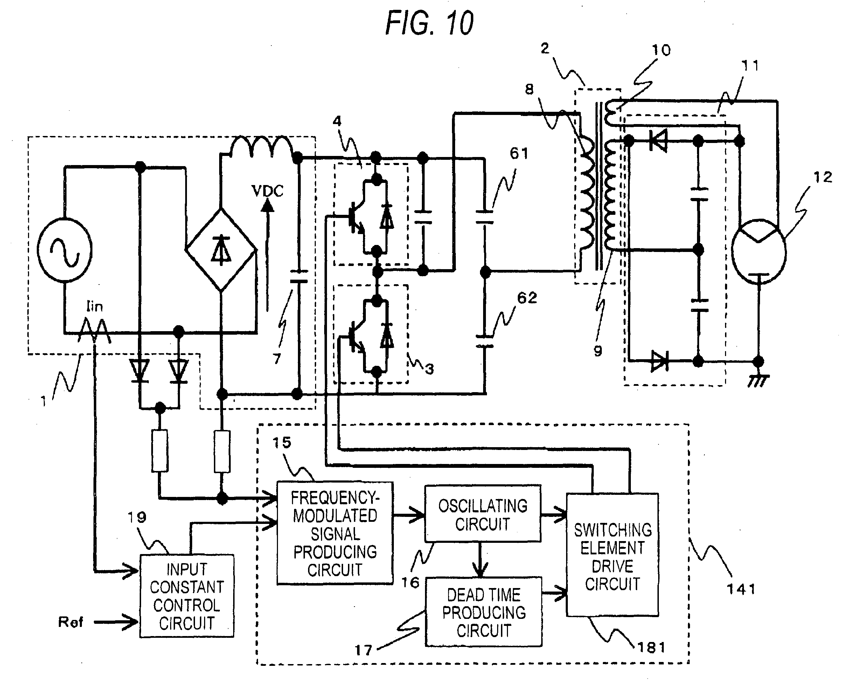

Fig. 10 is a circuit diagram for showing an arrangement of a magnetron driving power supply circuit according to a sixth embodiment of the present invention. In the sixth embodiment, a series circuit constructed of two semiconductor switching elements 3 and 4 is connected parallel to a DC voltage power supply obtained by rectifying the commercial power supply voltage; and one end of a resonant circuit formed by connecting a primary winding of a leakage transformer 2 to capacitors 61 and 62 is connected to a center point of the series circuit in an AC equivalent circuit, and the other end of the resonant circuit is connected to one end of the DC voltage power supply. Similar to the above-described first embodiment, in this sixth embodiment, a minimum frequency limiting means is arranged in such a manner that a switching frequency located in the vicinity of a boundary between a time period during which the switching frequency is limited to the minimum frequency, and a time period during which the limitation of the switching frequency is released is smoothly changed. As a result, higher harmonic currents of higher orders can be suppressed.

Since the magnetron driving power supply circuits of the fifth embodiment and the sixth embodiment are arranged as same as that of the first embodiment except for the driving circuit, the minimum frequency limiting means is constituted as explained in the second embodiment to the fourth embodiment, so that a similar effect to the effect of the first embodiment may be achieved.

As previously explained, in the high frequency heating apparatus according to the present invention, there is no such a sudden change of the switching frequency in the phases in the vicinity of 0 degree and 180 degrees at which the instantaneous voltage of the commercial power supply becomes the lowest voltage. As a result, the power supply higher harmonic distortion of the higher orders can be reduced, so that the high frequency heating apparatus can be applied to various sorts of inverter circuits.

## Claims

1. A magnetron driving-purpose high frequency heating apparatus comprising:
a DC voltage power supply (1) obtained by rectifying a commercial power supply voltage;
a series circuit (3,4) constituted by two semiconductor switching elements;
a resonant circuit (6,8) formed by connecting a primary winding (8) of a leakage transformer (2) to a capacitor (6), said series circuit being connected parallel to said DC voltage power supply (1), and said resonant circuit is connected parallel to one of said semiconductor switching elements (3,4);
drive means (18) for driving said respective semiconductor switching elements (3,4);
frequency-modulated signal producing means (15) for supplying to said drive means (18), a frequency-modulated signal which changes a switching frequency in response to a phase of the commercial power supply voltage (1);
minimum frequency limiting means for limiting a minimum frequency of said switching frequency;
rectifying means (11) connected to a secondary winding (9) of said leakage transformer (2); and
a magnetron (12) connected to said rectifying means (11);
the magnetron driving-purpose high frequency heating apparatus **characterized in that**
said frequency-modulated signal is represented by a shape of a frequency-modulated waveform; and said minimum frequency limiting means owns at least one of a first limiting function and a second limiting functions for limiting a frequency lower than or equal to said minimum frequency, and
said limiting function is adapted to limit a change of said frequency-modulated waveform from a frequency higher than said minimum frequency toward a lower frequency thereof by gradually increasing an influence degree.

2. A magnetron driving-purpose high frequency heating apparatus As claimed in claim 1, wherein
two sets of series circuits constituted by two semiconductor switching elements (3,4,31,41), respectively;
said resonant circuit formed by connecting a primary winding (8) of a leakage transformer (2) to a capacitor (7), two sets of said series circuit being connected parallel to said DC voltage power supply (1), respectively, one end of said resonant circuit being connected to a center point of one of said two series circuits, and the other end of said resonant circuit being connected to a center point of the other series circuit.

3. A magnetron driving-purpose high frequency heating apparatus as claimed claim 1:
said resonant circuit formed by connecting a primary winding (8) of a leakage transformer (2) to a capacitor (6), said series circuit being connected parallel to said DC voltage power supply (1), in an AC equivalent circuit, one end of said resonant circuit being connected to a center point of said series circuit, and the other end of said resonant circuit being connected to one end of said DC voltage power supply.

4. A magnetron driving-purpose high frequency heating apparatus as claimed in any one of claim 1 to claim 3, wherein said second limiting function is adapted to limit a frequency lower than or equal to said minimum frequency to be changed in a very small manner.

5. A magnetron driving-purpose high frequency heating apparatus as claimed in any of claims 1 to 4, wherein said first limiting function is adapted to change the influence degree by employing a resistance value change of a PN junction which is represented by a voltage-to-current characteristic.

6. A magnetron driving-purpose high frequency heating apparatus as claimed in any of claims 1 to 4, wherein said second limiting function changes the influence degree in a very small manner by employing a resistance value change of a PN junction which is represented by a voltage-to-current characteristic.

7. A magnetron driving-purpose high frequency heating apparatus as claimed in any of claims 1 to 5, wherein said frequency-modulated waveform is formed based upon a rectified waveform of a commercial power supply (1).

8. A magnetron driving-purpose high frequency heating apparatus as claimed in any of claims 1 to 7, wherein said minimum frequency does not depend upon the voltage of the commercial power supply (1), but is set to a fixed value.

## Patentansprüche

1. Magnetron-Ansteuer-Hochfrequenzheizvorrichtung, die umfasst:
eine Gleichspannungs-Stromquelle (1), die entsteht, indem eine Netzstromversorgung gleichgerichtet wird;
eine Reihenschaltung (3), die durch zwei Halbleiter-Schaltelemente gebildet wird;
einen Resonanzkreis (6, 8), der ausgebildet wird, indem eine Primärwicklung (8) eines Streufeldtransformators (2) mit einem Kondensator (6) verbunden wird, wobei die Reihenschaltung parallel zu der Gleichspannungs-Stromquelle (1) geschaltet ist und der Resonanzkreis parallel zu einem der Halbleiter-Schaltelemente (3, 4) geschaltet ist,
eine Ansteuereinrichtung (18) zum Ansteuern der jeweiligen Halbleiter-Schaltelemente (3, 4);
eine Einrichtung (15) zum Erzeugen frequenzmodulierter Signale, mit der der Ansteuereinrichtung (18) ein frequenzmoduliertes Signal zugeführt wird, das eine Schaltfrequenz in Reaktion auf eine Phase der Netzstromversorgung (1) ändert;
eine Minimalfrequenz-Begrenzungseinrichtung, die eine Minimalfrequenz der Schaltfrequenz begrenzt;
eine Gleichrichteinrichtung (11), die mit einer Sekundärwicklung (9) des Streufeldtransformators (2) verbunden ist; und
ein Magnetron (12), das mit der Gleichrichteinrichtung (11) verbunden ist wobei die Magnetron-Ansteuer-Hochfrequenzheizvorrichtung **dadurch gekennzeichnet ist, dass**
das frequenzmodulierte Signal durch eine Form einer frequenzmodulierten Wellenform repräsentiert wird und die Minimalfrequenz-Begrenzungseinrichtung über eine erste Begrenzungsfunktion oder/und eine zweite Begrenzungsfunktion zum Begrenzen einer Frequenz verfügt, die niedriger ist als die Minimalfrequenz oder ihr entspricht, und
die Begrenzungsfunktion so eingerichtet ist, dass sie eine Änderung der frequenzmodulierten Wellenform von einer Frequenz, die höher ist als die Minimalfrequenz, zu einer niedrigeren Frequenz derselben begrenzt, in dem sie einen Grad des Einflusses allmählich erhöht.

2. Magnetron-Ansteuer-Hochfrequenzheizvorrichtung nach Anspruch 1, wobei zwei Gruppen von Reihenschaltungen durch jeweils zwei Halbleiter-Schaltelemente (3, 4, 31, 41) gebildet werden;
der Resonanzkreis ausgebildet wird, indem eine Primärwicklung (8) eines Streufeldtransformators (2) mit einem Kondensator (7) verbunden wird, zwei Gruppen der Reihenschaltungen jeweils parallel zu der Gleichspannungs-Stromquelle (1) geschaltet sind, ein Ende des Resonanzkreises mit einem Mittelpunkt einer der zwei Reihenschaltungen verbunden ist und das andere Ende des Resonanzkreises mit einem Mittelpunkt der anderen Reihenschaltung verbunden ist.

3. Magnetron-Ansteuer-Hochfrequenzheizvorrichtung nach Anspruch 1,
wobei der Resonanzkreis ausgebildet wird, indem eine Primärwicklung (8) eines Streufeldtransformators (2) mit einem Kondensator (6) verbunden wird, die Reihenschaltung in einer Wechselstrom-Äquivalenzschaltung parallel zu der Gleichspannungs-Stromquelle (1) geschaltet ist, ein Ende des Resonanzkreises mit einem Mittelpunkt der Reihenschaltung verbunden ist und das andere Ende des Resonanzkreises mit einem Ende der Gleichspannungs-Stromquelle verbunden ist.

4. Magnetron-Ansteuer-Hochfrequenzheizvorrichtung nach einem der Ansprüche 1 bis 3, wobei die zweite Begrenzungsfunktion so eingerichtet ist, dass sie eine Frequenz, die niedriger ist als die Minimalfrequenz oder ihr entspricht, so begrenzt, dass sie sehr geringfügig geändert wird.

5. Magnetron-Ansteuer-Hochfrequenzheizvorrichtung nach einem der Ansprüche 1 bis 4, wobei die erste Begrenzungsfunktion so eingerichtet ist, dass sie den Grad des Einflusses ändert, indem sie eine Änderung des Widerstandswertes eines PN-Übergangs nutzt, die durch eine Spannungs-Strom-Charakteristik repräsentiert wird.

6. Magnetron-Ansteuer-Hochfrequenzheizvorrichtung nach einem der Ansprüche 1 bis 4, wobei die zweite Begrenzungsfunktion den Grad des Einflusses sehr geringfügig ändert, indem sie eine Änderung des Widerstandswertes eines PN-Übergangs nutzt, die durch eine Spannungs-Strom-Charakteristik repräsentiert wird.

7. Magnetron-Ansteuer-Hochfrequenzheizvorrichtung nach einem der Ansprüche 1 bis 5, wobei die frequenzmodulierte Wellenform auf Basis einer gleichgerichteten Wellenform einer Netzstromversorgung (1) ausgebildet wird.

8. Magnetron-Ansteuer-Hochfrequenzheizvorrichtung nach einem der Ansprüche 1 bis 7, wobei die Minimalfrequenz nicht von der Spannung der Netzstromversorgung (1) abhängt, sondern auf einen festen Wert eingestellt ist.

## Revendications

1. Dispositif de chauffage à haute fréquence à magnétron comprenant :
une alimentation de tension en courant continu (1) obtenue en redressant la tension du réseau d'alimentation commercial ;
un circuit série (3, 4) constitué par deux éléments de commutation à semiconducteur ;
un circuit résonant (6, 8) formé en connectant l'enroulement primaire (8) d'un transformateur de fuite (2) à un condensateur (6), ledit circuit série étant connecté en parallèle avec ladite alimentation de tension en courant continu (1) et ledit circuit résonant étant connecté en parallèle avec l'un desdits éléments de commutation à semiconducteur (3, 4) ;
un moyen de commande (18) pour commander lesdits éléments de commutation à semiconducteur (3, 4) ;
un moyen de production de signal modulé en fréquence (15) pour fournir audit moyen de commande (18) un signal modulé en fréquence qui modifie la fréquence de commutation en réponse à la phase de la tension du réseau d'alimentation commercial (1) ;
un moyen de limitation de fréquence minimale pour limiter la fréquence minimale de ladite fréquence de commutation ;
un moyen de redressement (11) connecté à un enroulement secondaire (9) dudit transformateur de fuite (2) ; et
un magnétron (12) connecté audit moyen de redressement (11) ;
le dispositif de chauffage à haute fréquence à magnétron étant **caractérisé en ce que**
ledit signal modulé en fréquence est représenté par la forme d'une forme d'onde modulée en fréquence ; et ledit moyen de limitation de fréquence minimale possède au moins une fonction parmi une première fonction de limitation et une seconde fonction de limitation pour limiter une fréquence inférieure ou égale à ladite fréquence minimale, et
ladite fonction de limitation est adaptée à limiter la variation de ladite forme d'onde modulée en fréquence depuis une fréquence supérieure à ladite fréquence minimale vers une fréquence inférieure à celle-ci en augmentant progressivement le degré d'influence.

2. Dispositif de chauffage à haute fréquence à magnétron selon la revendication 1, dans lequel
deux ensembles de circuits série sont constitués respectivement par deux éléments de commutation à semiconducteur (3, 4, 31, 41) ;
ledit circuit résonant étant formé en connectant l'enroulement primaire (8) d'un transformateur de fuite (2) à un condensateur (7), deux ensembles dudit circuit série étant respectivement connectés en parallèle avec ladite alimentation de tension en continu (1), une extrémité dudit circuit résonant étant connectée au point central de l'un desdits deux circuits série, et l'autre extrémité dudit circuit résonant étant connectée au point central de l'autre circuit série.

3. Dispositif de chauffage à haute fréquence à magnétron selon la revendication 1 :
ledit circuit résonant étant formé en connectant l'enroulement primaire (8) d'un transformateur de fuite (2) à un condensateur (6), ledit circuit série étant connecté en parallèle avec ladite alimentation de tension en courant continu (1), dans un circuit équivalent en courant alternatif, une extrémité dudit circuit résonant étant connectée au point central dudit circuit série, et l'autre extrémité dudit circuit résonant étant connectée à une extrémité de ladite alimentation de tension en courant continu.

4. Dispositif de chauffage à haute fréquence à magnétron selon l'une quelconque des revendications 1 à 3, dans lequel ladite seconde fonction de limitation est adaptée à limiter très faiblement une fréquence inférieure ou égale à ladite fréquence minimale destinée à être modifiée.

5. Dispositif de chauffage à haute fréquence à magnétron selon l'une quelconque des revendications 1 à 4, dans lequel ladite première fonction de limitation est adaptée à modifier le degré d'influence en utilisant la variation de la valeur de résistance d'une jonction PN qui est représentée par une caractéristique tension-courant.

6. Dispositif de chauffage à haute fréquence à magnétron selon l'une quelconque des revendications 1 à 4, dans lequel ladite seconde fonction de limitation modifie très faiblement le degré d'influence en utilisant la variation de la valeur de résistance d'une jonction PN qui est représentée par une caractéristique tension-courant.

7. Dispositif de chauffage à haute fréquence à magnétron selon l'une quelconque des revendications 1 à 5, dans lequel ladite forme d'onde modulée en fréquence est formée en se basant sur la forme d'onde redressée du réseau d'alimentation commercial (1).

8. Dispositif de chauffage à haute fréquence à magnétron selon l'une quelconque des revendications 1 à 7, dans lequel ladite fréquence minimale ne dépend pas de la tension du réseau d'alimentation commercial (1), mais est réglée à une valeur fixe.
